# EUROPEAN PATENT APPLICATION

(11) **EP 4 787 955 A1**
(43) Date of publication of application: **05.08.2026**
(21) Application number: 23953609.7
(22) Date of filing: 27.09.2023
(51) Int. Cl.: H04W 36/00

(54) **EFFECTIVE MEASUREMENT WINDOW CONFIGURATION METHOD, APPARATUS, AND STORAGE MEDIUM**

(71) Applicant: Beijing Xiaomi Mobile Software Co., Ltd., Beijing 100085 (CN)
(72) Inventor: HU, Ziquan, Beijing 100085 (CN); TAO, Xuhua, Beijing 100085 (CN)
(74) Representative: Stöckeler, Ferdinand
(86) International application number: PCT/CN2023/122364
(87) International publication number: WO 2025/065457

(57) **Abstract**

Provided in the present disclosure are an effective measurement window configuration method, an apparatus, and a storage medium. The method comprises: sending first information to a network device, the first information being used for indicating whether a terminal has the ability to perform cell measurement by using an effective measurement window having a duration less than a first length of time, and/or the first information is used for reporting a cell measurement result of a terminal; and receiving second information sent by the network device on the basis of the first information, the second information being used for indicating the duration of the effective measurement window configured by the network device for the terminal. The present disclosure can allow the duration of the configured effective measurement window to better fit with the network state of the terminal, and potent support is provided to ensure seamless handover of the terminal in an NR network and an LTE network.

## Description

### FIELD

The present disclosure relates to the field of communications, and in particular, to a method and an apparatus for configuring an effective measurement window, and a storage medium.

### BACKGROUND

In a 5th generation mobile communication technology (5G) system, a terminal may simultaneously connect to a new radio (NR) network and a long term evolution (LTE) network. In order to ensure seamless handover between the NR network and the LTE network, the terminal may monitor signal quality, signal strength, etc., of cells in the LTE network.

### SUMMARY

When a terminal in an NR network measures a cell in an LTE network, it may perform cell measurement within a duration of an effective measurement window (EMW). How to reasonably set the duration of the effective measurement window is crucial to ensuring seamless handover of the terminal between the NR network and the LTE network.

According to a first aspect of embodiments of the present disclosure, there is provided a method for configuring an effective measurement window, including:
sending first information to a network device, in which the first information is used to indicate whether a terminal has a capability of performing cell measurement using an effective measurement window having a duration less than a first time length, and/or the first information is used to report a cell measurement result of the terminal; and
receiving second information sent by the network device based on the first information, in which the second information indicates a duration of the effective measurement window configured by the network device for the terminal.

According to a second aspect of embodiments of the present disclosure, there is provided a method for configuring an effective measurement window, including:
receiving first information sent by a terminal, in which the first information is used to indicate whether a terminal has a capability of performing cell measurement using an effective measurement window having a duration less than a first time length, and/or the first information is used to report a cell measurement result of the terminal;
determining a duration of the effective measurement window configured for the terminal based on the first information; and
sending second information to the terminal based on the duration of the effective measurement window configured for the terminal, in which the second information indicates the duration of the effective measurement window configured by a network device for the terminal.

According to a third aspect of embodiments of the present disclosure, there is provided a terminal, including:
a transceiver module configured to send first information to a network device, in which the first information is used to indicate whether a terminal has a capability of performing cell measurement using an effective measurement window having a duration less than a first time length, and/or the first information is used to report a cell measurement result of the terminal,
in which the transceiver module is further configured to receive second information sent by the network device based on the first information, in which the second information indicates a duration of an effective measurement window configured by the network device for the terminal.

According to a fourth aspect of embodiments of the present disclosure, there is provided a network device, including:
a transceiver module configured to receive first information sent by a terminal, in which the first information is used to indicate whether a terminal has a capability of performing cell measurement using an effective measurement window having a duration less than a first time length, and/or the first information is used to report a cell measurement result of the terminal; and
a processing module configured to determine a duration of the effective measurement window configured for the terminal based on the first information,
in which the transceiver module is further configured to send second information to the terminal based on the duration of the effective measurement window configured for the terminal, and the second information indicates the duration of the effective measurement window configured by a network device for the terminal.

According to a fifth aspect of embodiments of the present disclosure, there is provided a terminal, including:
one or more processors,
in which the terminal is configured to perform the method for configuring an effective measurement window provided by the first aspect.

According to a sixth aspect of embodiments of the present disclosure, there is provided a network device, including:
one or more processors,
in which the network device is configured to perform the method for configuring an effective measurement window provided by the second aspect.

According to a seventh aspect of embodiments of the present disclosure, there is provided a communication system, including a terminal and a network device, in which the terminal is configured to implement the method for configuring an effective measurement window provided by the first aspect, and the network device is configured to implement the method for configuring an effective measurement window provided by the second aspect.

In embodiments of the present disclosure, by having the terminal send first information to the network device, the first information may be used to indicate whether the terminal has a capability of performing cell measurement using an effective measurement window having a duration less than a first time length, and/or the first information may be used to report a cell measurement result of the terminal, so that the network device may configure the duration of the effective measurement window for the terminal based on the first information. The terminal may receive the second information sent by the network device, which indicates the duration of the effective measurement window. This allows the configured duration of the effective measurement window to better conform to the network state of the terminal, providing strong support for ensuring seamless handover of the terminal between the NR network and the LTE network.

It is to be understood that both the foregoing general description and the following detailed description are illustrative and explanatory only and are not restrictive of the present disclosure.

### BRIEF DESCRIPTION OF THE DRAWINGS

The accompanying drawings herein are incorporated into the specification and constitute a part of the specification. Theses accompanying drawings illustrate embodiments conform to the present disclosure and are used to explain the principles of the present disclosure together with the specification.
FIG. 1 is a schematic diagram of an architecture of a communication system according to an embodiment of the present disclosure.
FIG. 2 is an interactive schematic diagram of a method for configuring an effective measurement window according to an embodiment of the present disclosure.
FIG. 3A is a flowchart of a method for configuring an effective measurement window according to an embodiment of the present disclosure.
FIG. 3B is a flowchart of a method for configuring an effective measurement window according to an embodiment of the present disclosure.
FIG. 4A is a block diagram of a terminal provided by an embodiment of the present disclosure.
FIG. 4B is a block diagram of a network device provided by an embodiment of the present disclosure.
FIG. 5A is a block diagram of a communication device 5100 provided by an embodiment of the present disclosure.
FIG. 5B is a block diagram of a chip 5200 provided by an embodiment of the present disclosure.

### DETAILED DESCRIPTION OF THE DISCLOSURE

Illustrative embodiments are illustrated in detail here, and the examples thereof are illustrated in the accompanying drawings. When the following description refers to the accompanying drawings, unless otherwise specified, the same or similar elements are denoted by the same numerals in the different accompanying drawings. Implementations described in the illustrative embodiments do not represent all implementations consistent with the present disclosure. On the contrary, they are merely examples of a device and a method consistent with some aspects of the present disclosure, as elaborated in the appended claims.

The terms used in the present disclosure are only for purpose of description of particular embodiments, and are not intended to limit the present disclosure. The singular form "a", "the" and "this" used in the present disclosure and the appended claims is also intended to include the plural form, unless other meanings are explicitly expressed in the context. It should be understood that the term "and/or" used here refers to include any or all of the possible combinations of at least one listed related items.

It should be understood that, although the terms "first", "second", "third" may be employed by the present disclosure to describe various messages, these messages should not limited by these messages. These terms are only used to distinguish the messages of the same type from each other. For example, a first message may be referred to as a second message without departing from the scope of the present disclosure, and similarly, the second message may also be referred to as the first message. Depending on the context, the word "if" used herein may be interpreted as "when...", "upon..." or "in response to determination".

Embodiments of the present disclosure provide a method and apparatus for configuring an effective measurement window, and a storage medium.

In a first aspect, embodiments of the present disclosure propose a method for configuring an effective measurement window, including:
sending first information to a network device, in which the first information is used to indicate whether a terminal has a capability of performing cell measurement using an effective measurement window having a duration less than a first time length, and/or the first information is used to report a cell measurement result of the terminal; and
receiving second information sent by the network device based on the first information, in which the second information indicates a duration of an effective measurement window configured by the network device for the terminal.

In the above embodiments, by having the terminal send the first information to the network device, the first information may be used to indicate whether the terminal has the capability of performing cell measurement using the effective measurement window having the duration less than the first time length, and/or the first information may be used to report the cell measurement result of the terminal, so that the network device may configure the duration of the effective measurement window for the terminal based on the first information. The terminal may receive the second information sent by the network device, which indicates the duration of the effective measurement window. This allows the configured duration of the effective measurement window to better conform to the network state of the terminal, providing strong support for ensuring seamless handover of the terminal between the NR network and the LTE network.

In combination with some embodiments of the first aspect, in some embodiments, the first information indicates that the terminal has the capability of performing cell measurement using the effective measurement window having the duration less than the first time length, and the first information is used for the network device to configure the duration of the effective measurement window as a second time length;
in a case where the first information indicates that the terminal does not have the capability of performing cell measurement using the effective measurement window having the duration less than the first time length, the first information is used for the network device to configure the duration of the effective measurement window as a third time length;
in a case where the cell measurement result reported by the first information satisfies a cell known condition, the first information is used for the network device to configure the duration of the effective measurement window as a second time length; or
in a case where the cell measurement result reported by the first information does not satisfy a cell known condition, the first information is used for the network device to configure the duration of the effective measurement window as a third time length,
in which the second time length is less than the first time length, and the third time length is greater than or equal to the first time length.

In above embodiments, by having the network device configure the effective measurement window with different durations for the terminal based on different conditions of the first information, the configured duration of the effective measurement window is made more consistent with a network state of the terminal, improving the rationality and flexibility of the effective measurement window configuration process.

In combination with some embodiments of the first aspect, in some embodiments, the cell measurement result satisfying the cell known condition includes at least one of:
the cell measurement result indicating that a cell meets a cell identification requirement within a past fourth time length;
the cell measurement result indicating that a cell is detected within a past fourth time length;
the cell measurement result indicating that a cell is measured within a past fourth time length; or
the cell measurement result indicating that an effective measurement result is reported for a cell within a past fourth time length.

In the above embodiments, by providing multiple possible conditions under which the cell measurement result satisfies the cell known condition, the flexibility of the effective measurement window configuration process is improved.

In combination with some embodiments of the first aspect, in some embodiments, the first information is used to report the cell measurement result of the terminal, and sending the first information to the network device includes:
sending the first information to the network device based on a network measurement reporting configuration,
in which the network device is used to determine the duration of the effective measurement window configured for the terminal based on the cell measurement result of the terminal within a past fourth time length.

In the above embodiments, by having the terminal send the first information to the network device based on the network measurement reporting configuration, the network device may determine the duration of the effective measurement window configured for the terminal based on the received first information and the cell measurement result of the terminal within the past fourth time length, ensuring the real-time nature of the configured effective measurement window duration.

In combination with some embodiments of the first aspect, in some embodiments, the second information is sent by the network device in a case where the duration of the effective measurement window determined based on the cell measurement result of the terminal within the past fourth time length is inconsistent with the duration of the effective measurement window indicated by previously sent second information.

In the above embodiments, the duration of the effective measurement window determined by the network device based on the cell measurement result of the terminal within the past fourth time length is the latest duration of the effective measurement window determined by the network device, and the duration of the effective measurement window indicated by the previously sent second information is the duration of the effective measurement window currently configured for the terminal. By having the network device send the second information only when the two are inconsistent, dynamic configuration of the duration of the effective measurement window is achieved, improving the flexibility of the effective measurement window configuration process.

In combination with some embodiments of the first aspect, in some embodiments, the second information carries the duration of the effective measurement window configured by the network device for the terminal; or
the second information carries window pattern configuration information, in which the window pattern configuration information is used for the terminal to determine the duration of the effective measurement window.

In the above embodiments, by providing optional implementations for the second information to indicate the duration of the effective window, the flexibility of the effective measurement window configuration process is improved.

In combination with some embodiments of the first aspect, in some embodiments, the terminal is connected to a new radio (NR) network, the terminal is used to measure a cell in a long term evolution (LTE) network without a measurement gap in the NR network, and the duration of the effective measurement window is used for the terminal to measure the cell in the LTE network.

In the above embodiments, a terminal connected to the NR network measures a cell in the LTE network without a measurement gap in the NR network, so that a more reasonably-duration effective measurement window is introduced for LTE measurement of a different system that does not require a measurement gap, ensuring that the terminal may achieve seamless handover between the inter-frequency NR network and the LTE network.

In a second aspect, embodiments of the present disclosure propose a method for configuring an effective measurement window, including:
receiving first information sent by a terminal, in which the first information is used to indicate whether a terminal has a capability of performing cell measurement using an effective measurement window having a duration less than a first time length, and/or the first information is used to report a cell measurement result of the terminal;
determining a duration of the effective measurement window configured for the terminal based on the first information; and
sending second information to the terminal based on the duration of the effective measurement window configured for the terminal, in which the second information indicates the duration of the effective measurement window configured by a network device for the terminal.

In the above embodiments, by having the network device receive the first information sent by the terminal, the first information may be used to indicate whether the terminal has the capability of performing cell measurement using the effective measurement window having the duration less than the first time length, and/or the first information may be used to report the cell measurement result of the terminal, so that the network device may determine the duration of the effective measurement window configured for the terminal based on the first information, and then send the second information indicating the duration of the effective measurement window to the terminal. This allows the configured duration of the effective measurement window to better conform to the network state of the terminal, providing strong support for ensuring seamless handover of the terminal between the NR network and the LTE network.

In combination with some embodiments of the second aspect, in some embodiments, determining the duration of the effective measurement window configured for the terminal based on the first information includes any one of:
in a case where the first information indicates that the terminal has the capability of performing the cell measurement using the effective measurement window having the duration less than the first time length, determining the duration of the effective measurement window as a second time length;
in a case where the first information indicates that the terminal does not have the capability of performing cell measurement using the effective measurement window having the duration less than the first time length, determining the duration of the effective measurement window as a third time length;
in a case where the cell measurement result reported by the first information satisfies a cell known condition, determining the duration of the effective measurement window as a second time length; or
in a case where the cell measurement result reported by the first information does not satisfy the cell known condition, determining the duration of the effective measurement window as a third time length,
in which the second time length is less than the first time length, and the third time length is greater than or equal to the first time length.

In combination with some embodiments of the second aspect, in some embodiments, the cell measurement result satisfying the cell known condition includes at least one of:
the cell measurement result indicating that a cell meets a cell identification requirement within a past fourth time length;
the cell measurement result indicating that a cell is detected within a past fourth time length;
the cell measurement result indicating that a cell is measured within a past fourth time length; or
the cell measurement result indicating that an effective measurement result is reported for a cell within a past fourth time length.

In combination with some embodiments of the second aspect, in some embodiments, the first information is used to report the cell measurement result of the terminal, and receiving the first information sent by the terminal includes:
receiving the first information sent by the terminal based on a network measurement reporting configuration.

In the above embodiments, by having the terminal send the first information to the network device based on the network measurement reporting configuration, it is ensured that the reporting of the first information may meet network requirements, and the real-time nature and accuracy of the first information obtained by the network device are ensured.

In combination with some embodiments of the second aspect, in some embodiments, determining the duration of the effective measurement window configured for the terminal based on the first information includes:
determining the duration of the effective measurement window configured for the terminal based on the cell measurement result of the terminal within a past fourth time length.

In the above embodiments, by determining the duration of the effective measurement window configured for the terminal based on the cell measurement result of the terminal within the past fourth time length, the real-time nature of the configured duration of the effective measurement window is ensured.

In combination with some embodiments of the second aspect, in some embodiments, sending the second information to the terminal based on the duration of the effective measurement window configured for the terminal includes:
sending the second information to the terminal in a case where the duration of the effective measurement window determined based on the cell measurement result of the terminal within the past fourth time length is inconsistent with the duration of the effective measurement window indicated by previously sent second information.

In combination with some embodiments of the second aspect, in some embodiments, the second information carries the duration of the effective measurement window configured by the network device for the terminal; or
the second information carries window pattern configuration information, in which the window pattern configuration information is used for the terminal to determine the duration of the effective measurement window.

In combination with some embodiments of the second aspect, in some embodiments, the terminal is connected to a new radio (NR) network, the terminal is used to measure a cell in a long term evolution (LTE) network without a measurement gap in the NR network, and the duration of the effective measurement window is used for the terminal to measure the cell in the LTE network.

In a third aspect, embodiments of the present disclosure propose a terminal, including:
a transceiver module configured to send first information to a network device, in which the first information is used to indicate whether a terminal has a capability of performing cell measurement using an effective measurement window having a duration less than a first time length, and/or the first information is used to report a cell measurement result of the terminal,
in which the transceiver module is further configured to receive second information sent by the network device based on the first information, in which the second information indicates a duration of an effective measurement window configured by the network device for the terminal.

In a fourth aspect, embodiments of the present disclosure propose a network device, including:
a transceiver module configured to receive first information sent by a terminal, in which the first information is used to indicate whether a terminal has a capability of performing cell measurement using an effective measurement window having a duration less than a first time length, and/or the first information is used to report a cell measurement result of the terminal; and
a processing module configured to determine a duration of the effective measurement window configured for the terminal based on the first information,
in which the transceiver module is further configured to send second information to the terminal based on the duration of the effective measurement window configured for the terminal, and the second information indicates the duration of the effective measurement window configured by a network device for the terminal.

In a fifth aspect, embodiments of the present disclosure propose a terminal, including:
one or more processors,
in which the terminal is configured to perform the method for configuring an effective measurement window as described in the first aspect and any one of the embodiments of the first aspect.

In a sixth aspect, embodiments of the present disclosure propose a network device, including:
one or more processors,
in which the network device is configured to perform the method for configuring an effective measurement window as described in the second aspect and any one of the embodiments of the second aspect.

In a seventh aspect, embodiments of the present disclosure propose a communication system including a terminal and a network device, in which the terminal is configured to implement the method for configuring an effective measurement window as described in the first aspect and any one of the embodiments of the first aspect, and the network device is configured to implement the method for configuring an effective measurement window as described in the second aspect and any one of the embodiments of the second aspect.

In an eighth aspect, embodiments of the present disclosure propose a storage medium storing instructions that, when executed by a communication device, cause the communication device to perform the method for configuring an effective measurement window as described in the first aspect, any one of the embodiments of the first aspect, the second aspect, and any one of the embodiments of the second aspect.

In a ninth aspect, embodiments of the present disclosure propose a program product that, when executed by a communication device, causes the communication device to perform the method for configuring an effective measurement window as described in the first aspect, any one of the embodiments of the first aspect, the second aspect, and any one of the embodiments of the second aspect.

In a tenth aspect, embodiments of the present disclosure propose a computer program that, when run on a computer, causes the computer to perform the method for configuring an effective measurement window as described in the first aspect, any one of the embodiments of the first aspect, the second aspect, and any one of the embodiments of the second aspect.

In an eleventh aspect, embodiments of the present disclosure propose a chip or a chip system, including a processing circuit configured to perform the method for configuring an effective measurement window as described in the first aspect, any one of the embodiments of the first aspect, the second aspect, and any one of the embodiments of the second aspect.

It may be understood that the terminal, the network device, the storage medium, the program product, the computer program, the chip or the chip system described above are all used to perform the method provided by embodiments of the present disclosure. Therefore, the beneficial effects that may be achieved may refer to the beneficial effects in the corresponding methods, which will not be repeated here.

Embodiments of the present disclosure provide a method and apparatus for configuring an effective measurement window, and a storage medium. In some embodiments, the term "method for configuring an effective measurement window" may be interchanged with terms such as "information processing method" or "communication method"; the term "apparatus for configuring an effective measurement window" may be interchanged with terms such as "information processing apparatus" or "communication apparatus"; and the terms "information processing system" and "communication system" may be interchanged with each other.

Embodiments of the present disclosure are not exhaustive, but are merely illustrative of some embodiments, and do not specifically limit the protection scope of the present disclosure. In the case of no contradiction, each step in a certain embodiment may be implemented as an independent embodiment, and the steps may be arbitrarily combined. For example, a solution obtained by removing some steps in a certain embodiment may also be implemented as an independent embodiment. Moreover, the order of the steps in a certain embodiment may be arbitrarily exchanged. In addition, optional implementations in a certain embodiment may be arbitrarily combined; furthermore, the embodiments may be arbitrarily combined with each other. For example, some or all steps of different embodiments may be arbitrarily combined, and a certain embodiment may be arbitrarily combined with optional implementations of other embodiments.

In each embodiment of the present disclosure, if there is no special description and logical conflict, the terms and/or descriptions among the embodiments are consistent and may be referenced to each other, and technical features in different embodiments may be combined to form new embodiments according to their intrinsic logical relationships.

The terms used in embodiments of the present disclosure are only for purpose of description of particular embodiments, and are not intended to limit the embodiments of the present disclosure.

In embodiments of the present disclosure, unless otherwise specified, an element represented in the singular form, such as "a", "an", "the", and the like, may represent "one and only one", or may represent "one or more", "at least one", and the like. For example, in a case where an article such as "a", "an", and "the" in English is used in translation, a noun after the article may be understood as a singular expression or a plural expression.

In embodiments of the present disclosure, the term "plurality of" refers to two or more than two.

In some embodiments, terms such as "at least one of," "one or more," "a plurality of," and "multiple" may be interchanged with each other.

In some embodiments, descriptions such as "at least one of A and B", "A and/or B", "A in one case, B in another case", "in response to one case A, in response to another case B", etc. may include the following technical solutions according to circumstances: in some embodiments, A (performing A independently of B); in some embodiments, B (performing B independently of A); in some embodiments, select from A and B for performing (A and B are selectively performed); in some embodiments, A and B (both A and B are performed). It is similar to the above when there are more branches such as A, B, C, etc.

In some embodiments, descriptions such as "A or B" may include the following technical solutions according to circumstances: in some embodiments, A (performing A independently of B); in some embodiments, B (performing B independently of A); in some embodiments, select from A and B for performing (A and B are selectively performed). It is similar to the above when there are more branches such as A, B, C, etc.

The prefix words such as "first" and "second" in embodiments of the present disclosure are only for distinguishing different description objects, and do not constitute restrictions on the position, order, priority, quantity, content, etc. of the description objects. For statements of the description objects, please refer to the description of the context in the claims or the embodiments, and should not constitute unnecessary restrictions due to the use of the prefix words. For example, if the description object is a "field", the ordinal number before the "field" in the "first field" and the "second field" does not limit the position or order between the "fields", and "first" and "second" do not limit whether the "fields" modified by them are in the same message, nor do they limit the order of the "first field" and the "second field". For another example, if the description object is "rank", the ordinal number before "rank" in "first rank" and "second rank" does not limit the priority between "ranks". For another example, the number of description objects is not limited by ordinal numbers, and may be one or more. Taking "first device" as an example, the number of "devices" may be one or more. In addition, objects modified by different prefixes may be the same or different, for example, if the description object is "device", the "first device" and the "second device" may be the same device or different devices, and the types may be the same or different. For another example, when the description object is "information", the "first information" and the "second information" may be the same information or different information, and the contents may be the same or different.

In some embodiments, "including A," "comprising A," "for indicating A," "carrying A," may be interpreted as directly carrying A, or may be interpreted as indirectly indicating A.

In some embodiments, terms such as "in response to," "in response to determining," "in a case where," "upon," "when," "if," "in case," and the like may be interchanged with each other.

In some embodiments, terms such as "greater than", "greater than or equal to", "not smaller than", "more than", "more than or equal to", "not less than", "higher than", "higher than or equal to", "not lower than", "above" and the like may be interchanged with each other, and terms such as "smaller than", "smaller than or equal to", "not greater than", "less than", "less than or equal to", "not more than", "lower than", "lower than or equal to", "not higher than", "below" and the like may be interchanged with each other.

In some embodiments, a device and an apparatus or the like may be interpreted as either physical or virtual, and the name thereof is not limited to the name described in the embodiments, and in some cases may also be understood as "equipment", "device", "circuit", "network element", "node", "function", "unit", "section", "system", "network", "chip", "chip system", "entity", and "body" or the like.

In some embodiments, a "network" may be interpreted as an apparatus (e.g., an access network device, a core network device, etc.) included in the network.

In some embodiments, "access network device (AN device)" may also be referred to as "radio access network device (RAN device)", "base station (BS)", "radio base station", "fixed station", and in some embodiments may also be referred to as "node", "access point", "transmission point (TP)", "reception point (RP)", "transmission/reception point (TRP)", "panel", "antenna panel", "antenna array", "cell", "macro cell", "small cell", "femto cell", "pico cell", "sector", "cell group", "serving cell", "carrier", "component carrier", "bandwidth part (BWP)" and the like.

In some embodiments, "terminal" or "terminal device" may be referred to as "user equipment (UE)", "user terminal", "mobile station (MS)", "mobile terminal (MT)", subscriber station, mobile unit, subscriber unit, wireless unit, remote unit, mobile unit, subscriber unit, wireless unit, remote unit, mobile device, wireless device, wireless communication device, remote device, mobile subscriber station, access terminal, mobile terminal, wireless terminal, remote terminal, handset, user agent, mobile client, client, or the like.

In some embodiments, terms such as "radio", "wireless", "radio access network (RAN)", "access network (AN)", and "RAN-based" may be interchanged with each other.

In some embodiments, obtaining data, information, etc., may comply with the laws and regulations of the country where the action takes place.

In some embodiments, data, information, etc., may be obtained after obtaining user consent.

In addition, each element, each row, or each column in the table of embodiments of the present disclosure may be implemented as an independent embodiment, and any combination of any element, any row, or any column may also be implemented as an independent embodiment.

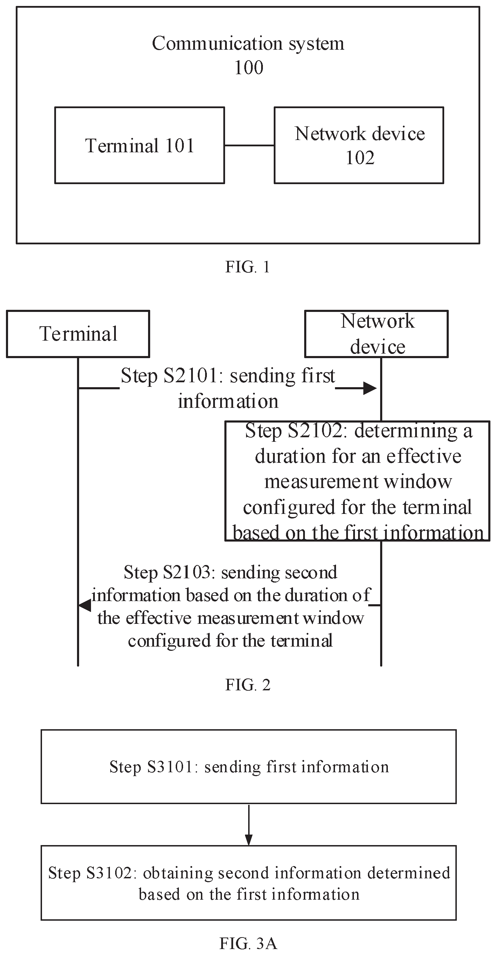

FIG. 1 is a schematic diagram of an architecture of a communication system according to an embodiment of the present disclosure.

As illustrated in FIG. 1, the communication system 100 includes a terminal 101 and a network device 102.

In some embodiments, the terminal 101 includes, for example, at least one of a mobile phone, a wearable device, an Internet of Things device, an automobile with a communication function, a smart car, a tablet computer, a computer with a wireless transmission and reception function, a virtual reality (VR) terminal device, an augmented reality (AR) terminal device, a wireless terminal device in an industrial control, a wireless terminal device in a self-driving, a wireless terminal device in a remote medical surgery, a wireless terminal device in a smart grid, a wireless terminal device in a transportation safety, a wireless terminal device in a smart city, and a wireless terminal device in a smart home, which is not limited to this.

In some embodiments, the network device 102 may include at least one of an access network device and a core network device.

In some embodiments, the access network device may be, for example, a node or device that accesses a terminal to a wireless network, and the access network device may include an evolved NodeB (eNB), a next generation eNB (ng-eNB), a next generation NodeB (gNB), a node B (NB), a home node B (HNB), a home evolved nodeB (HeNB), a radio backhaul device, a radio network controller (RNC), a base station controller (BSC), a base transceiver station (BTS), a base band unit (BBU), a mobile switching center in a 5G communication system, a base station, an open base station (RAN), a cloud base station (Cloud RAN), in a 6G communication system, a base station in other communication systems, and an access node in a Wi-Fi system, which is not limited to this.

In some embodiments, the technical solution of the present disclosure may be applied to an Open RAN architecture, and at this time, interfaces between access network devices or within access network devices according to embodiments of the present disclosure may be changed to internal interfaces of the Open RAN, and flow and information interaction between these internal interfaces may be realized by software or a program.

In some embodiments, the access network device may be composed of a central unit (CU) and a distributed unit (DU), in which the CU may also be referred to as a control unit, and the protocol layer of the access network device may be separated by adopting the structure of the CU-DU, some functions of the protocol layer are centrally controlled by the CU, and some or all functions of the remaining protocol layer are distributed in the DU, and the DU is centrally controlled by the CU, which is not limited to this.

In some embodiments, a core network device may be one device, including a plurality of network elements, or may be multiple devices or groups of devices, each including all or part of the plurality of network elements. Network elements may be virtual or physical. The core network includes, for example, at least one of an evolved packet core (EPC), a 5G core network (5GCN), and a next generation core (NGC).

It is to be understood that the communication system described in embodiments of the present disclosure is intended to more clearly illustrate the technical solutions of embodiments of the present disclosure and does not constitute a limitation of the technical solutions provided by embodiments of the present disclosure, and a person of ordinary skill in the art may know that, with the evolution of the system architecture and the emergence of new business scenarios, the technical solutions provided by embodiments of the present disclosure are equally applicable to similar technical problems.

The following embodiments of the present disclosure may be applied to the communication system 100 illustrated in FIG. 1 or a part of the main body, which is not limited to this. Each body illustrated in FIG. 1 is an example, the communication system may include all or some of the bodies in FIG. 1, or other bodies other than FIG. 1, the number and form of the bodies are arbitrary, the bodies may be physical or virtual, the connection relationship between the bodies is an example, the bodies may not be connected or connected, and the connection may be any form, including direct connection or indirect connection, wired connection or wireless connection.

Each embodiment of the present disclosure may be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), 5G new Radio (NR), future radio access (FRA), new-radio access technology (RAT), new radio (NR), new radio access (NX), future generation radio access (FX), global system for mobile communications (GSM (registered trademark) ), CDMA2000, ultra mobile broadband (UMB), IEEE 802.11 (Wi-Fi (registered trademark)), IEEE 802.16 (WiMAX (registered trademark)), IEEE 802.20, ultra-wideband (UWB), Bluetooth (registered trademark), public land mobile network (PLMN) network, device-to-device (D2D) system, machine to machine (M2M) system, Internet of Things (IoT) system, vehicle-to-everything (V2X) system, systems using other communication methods, next generation systems extended based on them, and the like. In addition, a plurality of systems may be applied in combination (for example, a combination of LTE or LTE-A and 5G, or the like).

FIG. 2 is an interactive schematic diagram of a method for configuring an effective measurement window according to an embodiment of the present disclosure. As illustrated in FIG. 2, embodiments of the present disclosure relate to a method for configuring an effective measurement window. The method includes the following steps:
Step S2101: a terminal sends first information to a network device.

Optionally, the network device may be an access network device, for example, the network device may be a base station.

The first information is used to indicate whether the terminal has a capability of performing cell measurement using an effective measurement window having a duration less than a first time length, and/or the first information is used to report a cell measurement result of the terminal.

In some embodiments, the first information is used to indicate whether the terminal has the capability of performing cell measurement using the effective measurement window having the duration less than the first time length. The terminal may actively send the first information to the network device, so that the network device may determine, based on the first information, whether the terminal has the capability of performing cell measurement using the effective measurement window having the duration less than the first time length, in order to configure the duration of the effective measurement window according to the capability of the terminal.

In some embodiments, the first information is used to report the cell measurement result of the terminal. The terminal may send the first information to the network device based on a network measurement reporting configuration.

The network measurement reporting configuration may be used to indicate a period for the terminal to report the cell measurement result. Optionally, the network measurement reporting configuration may also be used to indicate other parameters involved in the process of the terminal measuring and reporting the cell measurement result, which is not limited in the embodiments of the present disclosure.

In some embodiments, a core network device may send indication information to the terminal to set the network measurement reporting configuration for the terminal through the indication information.

In some embodiments, the core network device may send a control signaling to the terminal, and the control signaling may carry the above-mentioned indication information, to achieve the purpose of sending the indication information to the terminal.

Optionally, a first network element of the core network device may send the indication information to the terminal. The first network element may be an access and mobility management function (AMF), but is not limited thereto. Other network elements of the core network device may also send the indication information.

In some embodiments, the terminal may periodically send the first information for reporting the cell measurement result of the terminal to the network device based on the network measurement reporting configuration.

It should be noted that in each reporting process, the terminal may report the cell measurement result within the current period. The current period may be a time period ending at a current moment and having a time length satisfying the sending period of the first information.

Step S2102: the network device determines a duration of an effective measurement window configured for the terminal based on the first information.

In some embodiments, the network device may receive the first information sent by the terminal, and determine the duration of the effective measurement window configured for the terminal based on the first information.

In some embodiments, the first information is used to indicate whether the terminal has the capability of performing cell measurement using the effective measurement window having the duration less than the first time length. The network device may directly determine the duration of the effective measurement window for the terminal based on the above-mentioned first information.

Optionally, in a case where the first information indicates that the terminal has the capability of performing cell measurement using the effective measurement window having the duration less than the first time length, the network device may determine the duration of the effective measurement window as a second time length.

Optionally, in a case where the first information indicates that the terminal does not have the capability of performing cell measurement using the effective measurement window having the duration less than the first time length, the network device may determine the duration of the effective measurement window as a third time length.

The second time length is less than the first time length, and the third time length is greater than or equal to the first time length. That is, the second time length may be any value less than the first time length, and the third time length may be any value greater than or equal to the first time length. For example, the first time length may be 5 milliseconds (ms), then the second time length may be 2 ms, and the third time length may be 5 ms.

That is, for a terminal that has the capability of performing cell measurement using an effective measurement window having a duration less than the first time length, the duration of the effective measurement window of the terminal may be configured to a value smaller than the first time length; for a terminal that does not have the capability of performing cell measurement using an effective measurement window having a duration less than the first time length, the duration of the effective measurement window of the terminal may be configured to the first time length or a value larger than the first time length.

In some embodiments, the first information is used to report the cell measurement result of the terminal. The network device may determine the duration of the effective measurement window for the terminal based on whether the measurement result reported by the first information satisfies a cell known condition.

Optionally, in a case where the cell measurement result reported by the first information satisfies a cell known condition, the network device may determine the duration of the effective measurement window as a second time length.

Optionally, in a case where the cell measurement result reported by the first information does not satisfy a cell known condition, the network device may determine the duration of the effective measurement window as a third time length.

The second time length is less than the first time length, and the third time length is greater than or equal to the first time length. That is, the second time length may be any value less than the first time length, and the third time length may be any value greater than or equal to the first time length. For example, the first time length may be 5 ms, then the second time length may be 2 ms, and the third time length may be 5 ms.

In some embodiments, the cell measurement result satisfying the cell known condition may include at least one of:
the cell measurement result indicating that a cell meets a cell identification requirement within a past fourth time length;
the cell measurement result indicating that a cell is detected within a past fourth time length;
the cell measurement result indicating that a cell is measured within a past fourth time length; or
the cell measurement result indicating that an effective measurement result is reported for a cell within a past fourth time length.

The fourth time length may be any time length. For example, the fourth time length may be 5 seconds, but is not limited thereto. The specific value of the fourth time length is not limited in the embodiments of the present disclosure.

Taking the fourth time length being 5s as an example, the cell measurement result satisfying the cell known condition includes at least one of:
the cell measurement result indicating that a cell meets a cell identification requirement within the past 5s;
the cell measurement result indicating that a cell is detected within the past 5s;
the cell measurement result indicating that a cell is measured within the past 5s; or
the cell measurement result indicating that an effective measurement result is reported for a cell within the past 5s.

It should be noted that if the cell measurement result satisfies at least one of the above conditions, the cell may be considered known. Conversely, if the cell measurement result does not satisfy any of the above conditions, the cell may be considered unknown.

For a terminal that reports a known cell, the duration of the effective measurement window used by the terminal to measure the cell may be configured to a value smaller than the first time length; for a terminal that reports an unknown cell, the duration of the effective measurement window used by the terminal to measure the cell may be configured to the first time length or a value larger than the first time length.

It should be noted that, as introduced in the above embodiments, the terminal may send the first information for reporting the cell measurement result of the terminal to the terminal based on the network measurement reporting configuration. That is, the terminal may periodically send the first information for reporting the cell measurement result of the terminal to the network device based on the network measurement reporting configuration. Therefore, the network device may periodically receive the first information for reporting the cell measurement result of the terminal.

In some embodiments, upon receiving the first information for reporting the cell measurement result of the terminal, the network device may determine the cell measurement result of the terminal within the past fourth time length based on the most recently received first information, and determine the duration of the effective measurement window configured for the terminal based on the cell measurement result of the terminal within the past fourth time length.

The fourth time length may be different from the period in which the terminal sends the first information.

Step S2103: the network device sends second information to the terminal based on the duration of the effective measurement window configured for the terminal.

In some embodiments, after determining the duration of the effective measurement window configured for the terminal, the network device may send the second information to the terminal based on the determined duration of the effective measurement window.

The second information indicates the duration of the effective measurement window configured by the network device for the terminal.

In some embodiments, the first information used by the network device to determine the duration of the effective measurement window is used to indicate whether the terminal has the capability of performing cell measurement using the effective measurement window having the duration less than the first time length. Then, the network device may send the second information directly to the terminal after determining the duration of the effective measurement window, to configure the duration of the effective measurement window for the terminal through the second information.

In some embodiments, the first information used by the network device to determine the duration of the effective measurement window is used to report the cell measurement result of the terminal. Then, the network device may send the second information to the terminal in a case where the duration of the effective measurement window determined based on the cell measurement result of the terminal within the past fourth time length is inconsistent with the duration of the effective measurement window indicated by previously sent second information.

That is, the network device may send the second information to the terminal only when the newly configured duration of the effective measurement window changes compared to the previously configured duration of the effective measurement window.

In some embodiments, the terminal may receive the second information sent by the network device based on the first information. The second information may carry the duration of the effective measurement window configured by the network device for the terminal, or the second information may carry window pattern configuration information, in which the window pattern configuration information may be used for the terminal to determine the duration of the effective measurement window.

In some embodiments, the second information may carry the duration of the effective measurement window configured by the network device for the terminal, so that the terminal may directly complete the configuration of the duration of the effective measurement window based on the indication of the second information.

In some embodiments, the second information may carry window pattern configuration information, and the terminal may determine the duration of the effective measurement window configured for it by the network device based on the window pattern configuration information carried in the second information, and may then complete the corresponding configuration based on the determined duration of the effective measurement window.

Optionally, the window pattern configuration information may be used to indicate a gap pattern id, and the durations of the effective measurement window corresponding to different gap pattern ids may be pre-set, so that the terminal may determine the duration of the effective measurement window based on the pre-set correspondence.

It should be noted that the terminal may be a terminal already connected to an NR network. The terminal is used to measure a cell in an LTE network without a measurement gap in the NR network. The duration of the effective measurement window is used for the terminal to measure the cell in the LTE network, so that the terminal may achieve seamless handover between the NR network and the LTE network.

In some embodiments, the name of information or the like is not limited to the name described in embodiments, and terms such as "information", "message", "signal", "signaling", "report", "configuration", "indication", "instruction", "command", "channel", "parameter", "domain", "field", "symbol", "codebook", "codeword", "bit", "data", "program", and "chip" may be interchanged with each other.

In some embodiments, terms such as "moment", "time point", "time", "time position" may be interchanged. Terms such as "duration", "time period", "time window", "window", "time" may be interchanged.

In some embodiments, terms such as "cell", "component carrier (CC)", "frequency carrier", "carrier frequency" may be interchanged.

In some embodiments, "obtain", "acquire", "receive", "transmit", "two-way transmission", "send and/or receive" may be interchanged, and may be interpreted as receiving from another entity, obtaining from a protocol, obtaining from a higher layer, obtaining through own processing, self-implementation, and other meanings.

In some embodiments, terms such as "send", "transmit", "report", "deliver", "transmit", "two-way transmission", "send and/or receive" may be interchanged.

In some embodiments, terms such as "certain", "predetermined", "pre-set", "set", "indicated", "a certain", "any", "first" may be interchanged. "Specific A", "preset A", "pre-set A", "set A", "indicated A", "a certain A", "any A", "first A" may be interpreted as A predefined in a protocol, etc., or may be interpreted as A obtained through setting, configuration, or indication, etc., or may be interpreted as specific A, a certain A, any A, or first A, etc., but not limited thereto.

In some embodiments, determination or judgment may be performed through a value represented by 1 bit (0 or 1), or through a true/false value (Boolean value) represented by true or false, or through numerical comparison (e.g., comparison with a predetermined value), but not limited thereto.

In some embodiments, "not expecting to receive" may be interpreted as not receiving on time domain resources and/or frequency domain resources, or may be interpreted as not performing subsequent processing on data or the like after receiving the data or the like; "not expecting to transmit" may be interpreted as not transmitting, or may be interpreted as transmitting but not expecting the receiver to respond to the transmitted content.

The method for configuring an effective measurement window according to the embodiments of the present disclosure may include at least one of steps S2101 to S2103. For example, step S2101 may be implemented as an independent embodiment, step S2102 may be implemented as an independent embodiment, steps 1+3 may be implemented as an independent embodiment, steps S2101 and S2102 may be implemented as an independent embodiment, steps S2102 and S2103 may be implemented as an independent embodiment, but is not limited thereto.

In some embodiments, step S2101 is optional and may be omitted or replaced in different embodiments.

In some embodiments, step S2103 is optional and may be omitted or replaced in different embodiments.

FIG. 3A is a flowchart of a method for configuring an effective measurement window according to an embodiment of the present disclosure. As illustrated in FIG. 3A, embodiments of the present disclosure relate to a method for configuring an effective measurement window. The method includes the followings steps:
Step S3101: first information is sent.

In some embodiments, the terminal may send the first information to the network device, but is not limited thereto. The terminal may also send the first information to other entities.

The first information is used to indicate whether the terminal has a capability of performing cell measurement using an effective measurement window having a duration less than a first time length, and/or the first information is used to report a cell measurement result of the terminal.

For the optional implementation of step S3101, reference may be made to the optional implementation of step S2101 in FIG. 2 and other associated parts in the embodiment related to FIG. 2, which will not be repeated here.

Step S3102: second information determined based on the first information is obtained.

In some embodiments, the terminal may receive the second information sent by the network device based on the first information, but is not limited thereto. The terminal may also receive the second information sent by other entities based on the first information.

The second information indicates the duration of the effective measurement window configured by the network device for the terminal.

For optional implementations of step S3102, reference may be made to the optional implementations of steps S2102 and S2103 in FIG. 2 and other related parts of the embodiment related to FIG. 2, which will not be repeated here.

The method for configuring an effective measurement window according to the embodiments of the present disclosure may include at least one of steps S3101 to S3102. For example, step S3101 may be implemented as an independent embodiment, step S3102 may be implemented as an independent embodiment, but is not limited thereto.

In some embodiments, step S3101 is optional and may be omitted or replaced in different embodiments.

In some embodiments, step S3102 is optional and may be omitted or replaced in different embodiments.

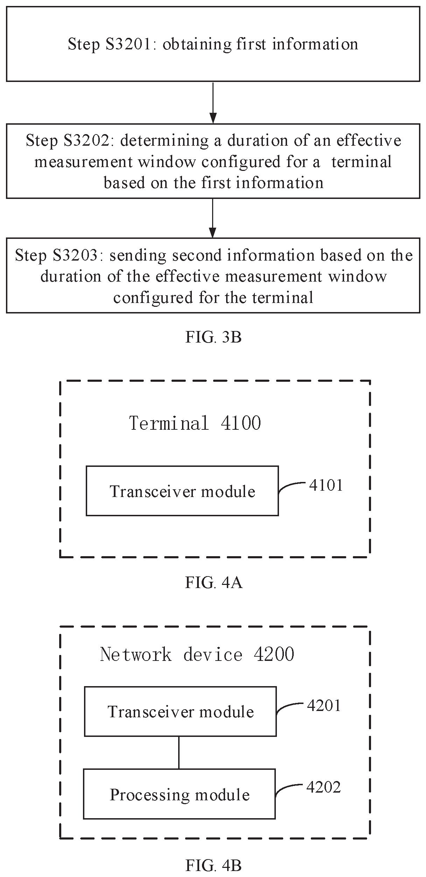

FIG. 3B is a schematic flowchart of a method for configuring an effective measurement window according to an embodiment of the present disclosure. As illustrated in FIG. 3B, embodiments of the present disclosure relate to a method for configuring an effective measurement window. The method includes the following steps:
Step S3201: first information is obtained.

In some embodiments, the network device may receive the first information sent by the terminal, but is not limited thereto. The network device may also receive the first information sent by other entities.

The first information is used to indicate whether the terminal has a capability of performing cell measurement using an effective measurement window having a duration less than a first time length, and/or the first information is used to report a cell measurement result of the terminal.

For the optional implementation of step S3201, reference may be made to the optional implementation of step S2102 in FIG. 2 and other associated parts in the embodiment related to FIG. 2, which will not be repeated here.

Step S3202: a duration of an effective measurement window configured for the terminal is determined based on the first information.

For the optional implementation of step S3202, reference may be made to the optional implementation of step S2102 in FIG. 2 and other associated parts in the embodiment related to FIG. 2, which will not be repeated here.

Step S3203: second information is sent based on the duration of the effective measurement window configured for the terminal.

In some embodiments, the network device may send the second information to the terminal based on the duration of the effective measurement window configured for the terminal, but is not limited thereto. The network device may also send the second information to other entities.

The second information indicates the duration of the effective measurement window configured by the network device for the terminal.

For the optional implementation of step S3203, reference may be made to the optional implementation of step S2103 in FIG. 2 and other associated parts in the embodiment related to FIG. 2, which will not be repeated here.

The method for configuring an effective measurement window according to the embodiments of the present disclosure may include at least one of steps S3201 to S3203. For example, step S3201 may be implemented as an independent embodiment, step S3202 may be implemented as an independent embodiment, step S3203 may be implemented as an independent embodiment, steps S3201 and S3202 may be implemented as an independent embodiment, steps S3202 and S3203 may be implemented as an independent embodiment, but is not limited thereto.

In some embodiments, step S3101 is optional and may be omitted or replaced in different embodiments.

In some embodiments, steps S3101 and S3102 are optional. In different embodiments, one or more of these steps may be omitted or substituted.

In some embodiments, step S3103 is optional and may be omitted or replaced in different embodiments.

In embodiments of the present disclosure, some or all of the steps, optional implementations thereof, may be arbitrarily combined with some or all of the steps in other embodiments, and may be arbitrarily combined with optional implementations of other embodiments.

Embodiments of the present disclosure also provide an apparatus for implementing any of the above methods, for example, an apparatus including a unit or a module for implementing steps performed by a terminal in any of the above methods is provided. For another example, another apparatus is provided, including a unit or module for implementing the steps performed by a network device (e.g., an access network device, a core network function node, a core network device, etc.) in any of the above methods.

It should be understood that the division of various units or modules in the above apparatus is only a division of logical functions, and may be fully or partially integrated into one physical entity or may be physically separated when actually implemented. Additionally, the units or modules in the apparatus may be implemented in the form of software called by a processor. For example, the apparatus includes a processor connected to a memory storing instructions. The processor calls the instructions stored in the memory to implement any of the above methods or the functions of the units/modules of the apparatus. The processor may be a general-purpose processor, such as a Central Processing Unit (CPU) or a microprocessor, and the memory may be internal or external to the apparatus. Alternatively, the units or modules in the apparatus may be implemented in the form of a hardware circuit, and some or all of the functions of the units or modules may be implemented by designing the hardware circuit, and the above hardware circuit may be understood as one or more processors; for example, in an implementation, the hardware circuit is an application-specific integrated circuit (ASIC), and the functions of some or all of the above units or modules are realized by designing the logical relationship of elements in the circuit; for another example, in another implementation, the hardware circuit may be implemented by a programmable logic device (PLD). Taking a field programmable gate array (FPGA) as an example, the hardware circuit may include a large number of logic gate circuits, and the connection relationship between the logic gate circuits is configured by a configuration file, realizing the functions of some or all of the above units or modules. All units or modules of the above apparatus may be implemented entirely via software called by a processor, or entirely via hardware circuits, or partially via software called by a processor and the remaining part via hardware circuits.

In embodiments of the present disclosure, the processor is a circuit having signal processing capabilities, and in an implementation, the processor may be a circuit having instruction reading and running capabilities, such as a central processing unit (CPU), a microprocessor, a graphics processing unit (GPU) (which may be understood as a microprocessor), or a digital signal processor (DSP), etc.; in another implementation, the processor may implement certain functions through the logical relationship of hardware circuits that are fixed or reconfigurable, for example, the processor is a hardware circuit implemented by an application-specific integrated circuit (ASIC) or a programmable logic device (PLD), such as an FPGA. In the reconfigurable hardware circuit, the process in which the processor loads a configuration document to implement the configuration of the hardware circuit may be understood as the process in which the processor loads instructions to implement the functions of some or all of the above units or modules. In addition, it may also be a hardware circuit designed for artificial intelligence, which may be understood as an ASIC, such as a neural network processing unit (NPU), a tensor processing unit (TPU), a deep learning processing unit (DPU), and the like.

FIG. 4A is a block diagram of a terminal provided by an embodiment of the present disclosure. As illustrated in FIG. 4A, a terminal 4100 may at least include: a transceiver module 4101. In some embodiments, the transceiver module 4101 is configured to send first information to a network device, in which the first information is used to indicate whether a terminal has a capability of performing cell measurement using an effective measurement window having a duration less than a first time length, and/or the first information is used to report a cell measurement result of the terminal. The transceiver module 4101 is further configured to receive second information sent by the network device based on the first information, in which the second information indicates a duration of an effective measurement window configured by the network device for the terminal.

Optionally, the transceiver module 4101 is configured to perform at least one of the communication steps (e.g., step S2101, but not limited thereto) performed by the terminal in any of the above methods, which will not be repeated here.

Optionally, the terminal 4100 may also include other modules. For example, the terminal 4100 may also include a processing module, and the processing module is configured to perform at least one of the other steps performed by the terminal in any of the above methods, which will not be repeated here.

FIG. 4B is a block diagram of a network device provided by an embodiment of the present disclosure. As illustrated in FIG. 4B, a network device 4200 may at least include: at least one of a transceiver module 4201 and a processing module 4202. In some embodiments, the transceiver module 4201 is configured to receive first information sent by a terminal, in which the first information is used to indicate whether the terminal has a capability of performing cell measurement using an effective measurement window having a duration less than a first time length, and/or the first information is used to report a cell measurement result of the terminal. The processing module 4202 is configured to determine a duration of an effective measurement window configured for the terminal based on the first information. The transceiver module 4201 is further configured to send second information to the terminal based on the duration of the effective measurement window configured for the terminal, in which the second information indicates the duration of the effective measurement window configured by the network device for the terminal.

Optionally, the transceiver module 4201 is configured to perform at least one of the communication steps (e.g., step S2103, but not limited thereto) performed by the network device in any of the above methods, which will not be repeated here. The processing module 4102 is configured to perform at least one of the other steps (e.g., step S2103, but not limited thereto) performed by the network device in any of the above methods, which will not be repeated here.

In some embodiments, the transceiver module may include a transmitter and/or a receiver, which may be separate or integrated together. Optionally, the transceiver module may be interchanged with the transceiver.

In some embodiments, the processing module may be one module or may include a plurality of submodules. Optionally, the plurality of submodules respectively perform all or part of the steps required to be performed by the processing module. Optionally, the processing module may be interchanged with the processor.

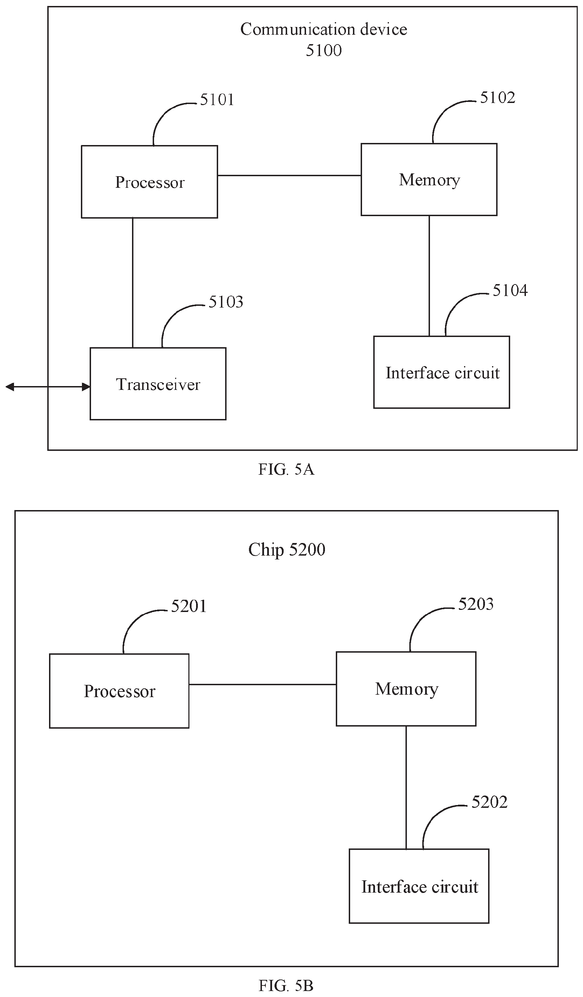

FIG. 5A is a block diagram of a communication device 5100 provided by an embodiment of the present disclosure. The communication device 5100 may be a terminal (e.g., a user equipment, etc.), or a network device (e.g., an access network device, a core network device, etc.), or a chip, a chip system, or a processor supporting the network device to implement any of the above methods, or a chip, a chip system, or a processor supporting the terminal to implement any of the above methods. The communication device 5100 may be used to implement the methods described in the above method embodiments. For details, reference may be made to the descriptions in the above method embodiments.

As illustrated in FIG. 5A, the communication device 5100 includes one or more processors 5101. The processor 5101 may be a general-purpose processor, a dedicated processor, or the like, and may be, for example, a baseband processor or a central processing unit. The baseband processor may be used to process a communication protocol and communication data, and the central processor may be used to control the communication device (e.g., a base station, a baseband chip, a terminal device, a terminal device chip, a DU, or a CU, etc.), execute programs, and process program data. The communication device 5100 is configured to perform any of the above methods.

In some embodiments, the communication device 5100 further includes one or more memories 5102 for storing instructions. Optionally, all or part of the memory 5102 may also be outside the communication device 5100.

In some embodiments, the communication device 5100 further includes one or more transceivers 5103. When the communication device 5100 includes one or more transceivers 5103, the transceiver 5103 performs at least one of the communication steps (e.g., step S2101, but not limited thereto) such as sending and/or receiving in the above methods, and the processor 5101 performs at least one of the other steps (e.g., step S2102, but not limited thereto).

In some embodiments, the transceiver may include a receiver and/or a transmitter, which may be separate or integrated together. Optionally, terms such as a transceiver, a transceiver unit, a transceiving machine, and a transceiver circuit may be mutually replaced, terms such as a transmitter, a transmitter unit, a transceiving machine, and a transmitter circuit may be mutually replaced, and terms such as a receiver, a receiving unit, a receiving machine, and a receiving circuit may be mutually replaced.

In some embodiments, the communication device 500 may include one or more interface circuits 5104. Optionally, the interface circuit 5104 is connected to the memory 5102. The interface circuit 5104 may be used to receive signals from the memory 5102 or other devices, and may be used to send signals to the memory 5102 or other devices. For example, the interface circuit 5104 may read instructions stored in the memory 5102 and send the instructions to the processor 5101.

The communication device 5100 in the above description of embodiments may be a network device or a terminal device, but the scope of the communication device 5100 described in the present disclosure is not limited to this, and the structure of the communication device 5100 may not be limited by FIG. 5A. The communication device may be a stand-alone device or may be part of a larger device. For example, the communication device may be: 1) a stand-alone integrated circuit IC, or a chip, or a chip system or subsystem; (2) a set having one or more ICs, optionally, the set of ICs may also include storage components for storing data, programs; (3) an ASIC, such as a Modem; (4) modules that may be embedded in other devices; (5) receivers, terminal devices, intelligent terminal devices, cellular phones, wireless devices, handsets, mobile units, vehicle devices, network devices, cloud devices, artificial intelligence devices, etc.; (6) Other devices, etc.

FIG. 5B is a block diagram of a chip 5200 provided by an embodiment of the present disclosure. In a case where the communication device 5100 may be a chip or a chip system, reference may be made to the schematic structural diagram of the chip 5200 illustrated in FIG. 5B, which is not limited to this.

The chip 5200 includes one or more processors 5201, and the chip 5200 is configured to perform any of the above methods.

In some embodiments, the chip 5200 further includes one or more interface circuits 5202. Optionally, the interface circuit 5202 is connected to the memory 5203, the interface circuit 5202 may be used to receive signals from the memory 5203 or other devices, and the interface circuit 5202 may be used to transmit signals to the memory 5203 or other devices. For example, the interface circuit 5202 may read instructions stored in the memory 5203 and send the instructions to the processor 5201.

In some embodiments, the interface circuit 5202 performs at least one of the communication steps (e.g., step S2101, but not limited thereto) such as sending and/or receiving in the above methods, and the processor 5201 performs at least one of the other steps (e.g., step S2102, but not limited thereto).

In some embodiments, terms such as interface circuit, interface, transceiver pin, transceiver, and the like may be interchanged with each other.

In some embodiments, the chip 5200 further includes one or more memories 5203 for storing instructions. Optionally, all or part of the memory 5203 may be outside the chip 5200.

The present disclosure also provides a storage medium having instructions stored thereon that, when the instructions are executed on the communication device 5100, cause the communication device 5100 to perform any of the above methods. Optionally, the storage medium is an electronic storage medium. Optionally, the storage medium is a computer-readable storage medium, but is not limited to this, and may be a storage medium readable by another device. Optionally, the storage medium may be a non-transitory storage medium, but is not limited to this, and may be a transitory storage medium.

The present disclosure also provides a program product that, when executed by the communication device 5100, causes the communication device 5100 to perform any of the above methods. Optionally, the program product is a computer program product.

The present disclosure also provides a computer program that, when run on a computer, causes the computer to perform any of the above methods.

Other embodiments of the present disclosure will readily occur to a person skilled in the art upon consideration of the specification and practice of the invention disclosed herein. The present disclosure is intended to cover any variations, uses, or adaptations of the present disclosure that follow the general principles of the present disclosure and include common knowledge or conventional technical means in the art not disclosed by the present disclosure. The specification and embodiments are to be regarded as exemplary only, with the true scope and spirit of the disclosure being indicated by the following claims.

It should be understood that the present disclosure is not limited to the precise structures described above and illustrated in the accompanying drawings, and that various modifications and changes may be made without departing from the scope thereof. The scope of the present disclosure is limited only by the scope of the appended claims.

## Claims

1. A method for configuring an effective measurement window, comprising:
sending first information to a network device, wherein the first information is used to indicate whether a terminal has a capability of performing cell measurement using an effective measurement window having a duration less than a first time length, and/or the first information is used to report a cell measurement result of the terminal; and
receiving second information sent by the network device based on the first information, wherein the second information indicates a duration of an the effective measurement window configured by the network device for the terminal.

2. The method according to claim 1, wherein:
in a case where the first information indicates that the terminal has the capability of performing the cell measurement using the effective measurement window having the duration less than the first time length, the first information is used for the network device to configure the duration of the effective measurement window as a second time length;
in a case where the first information indicates that the terminal does not have the capability of performing cell measurement using the effective measurement window having the duration less than the first time length, the first information is used for the network device to configure the duration of the effective measurement window as a third time length;
in a case where the cell measurement result reported by the first information satisfies a cell known condition, the first information is used for the network device to configure the duration of the effective measurement window as a second time length; or
in a case where the cell measurement result reported by the first information does not satisfy a cell known condition, the first information is used for the network device to configure the duration of the effective measurement window as a third time length,
wherein the second time length is less than the first time length, and the third time length is greater than or equal to the first time length.

3. The method according to claim 2, wherein the cell measurement result satisfying the cell known condition comprises at least one of:
the cell measurement result indicating that a cell meets a cell identification requirement within a past fourth time length;
the cell measurement result indicating that a cell is detected within a past fourth time length;
the cell measurement result indicating that a cell is measured within a past fourth time length; or
the cell measurement result indicating that an effective measurement result is reported for a cell within a past fourth time length.

4. The method according to any one of claims 1 to 3, wherein the first information is used to report the cell measurement result of the terminal, and sending the first information to the network device comprises:
sending the first information to the network device based on a network measurement reporting configuration,
wherein the network device is used to determine the duration of the effective measurement window configured for the terminal based on the cell measurement result of the terminal within a past fourth time length.

5. The method according to claim 4, wherein the second information is sent by the network device in a case where the duration of the effective measurement window determined based on the cell measurement result of the terminal within the past fourth time length is inconsistent with the duration of the effective measurement window indicated by previously sent second information.

6. The method according to any one of claims 1 to 5, wherein the second information carries the duration of the effective measurement window configured by the network device for the terminal; or
the second information carries window pattern configuration information, wherein the window pattern configuration information is used for the terminal to determine the duration of the effective measurement window.

7. The method according to any one of claims 1 to 6, wherein the terminal is connected to a new radio (NR) network, the terminal is used to measure a cell in a long term evolution (LTE) network without a measurement gap in the NR network, and the duration of the effective measurement window is used for the terminal to measure the cell in the LTE network.

8. A method for configuring an effective measurement window, comprising:
receiving first information sent by a terminal, wherein the first information is used to indicate whether a terminal has a capability of performing cell measurement using an effective measurement window having a duration less than a first time length, and/or the first information is used to report a cell measurement result of the terminal;
determining a duration of the effective measurement window configured for the terminal based on the first information; and
sending second information to the terminal based on the duration of the effective measurement window configured for the terminal, wherein the second information indicates the duration of the effective measurement window configured by a network device for the terminal.

9. The method according to claim 8, wherein determining the duration of the effective measurement window configured for the terminal based on the first information comprises any one of:
in a case where the first information indicates that the terminal has the capability of performing the cell measurement using the effective measurement window having the duration less than the first time length, determining the duration of the effective measurement window as a second time length;
in a case where the first information indicates that the terminal does not have the capability of performing cell measurement using the effective measurement window having the duration less than the first time length, determining the duration of the effective measurement window as a third time length;
in a case where the cell measurement result reported by the first information satisfies a cell known condition, determining the duration of the effective measurement window as a second time length; or
in a case where the cell measurement result reported by the first information does not satisfy a cell known condition, determining the duration of the effective measurement window as a third time length,
wherein the second time length is less than the first time length, and the third time length is greater than or equal to the first time length.

10. The method according to claim 9, wherein the cell measurement result satisfying the cell known condition comprises at least one of:
the cell measurement result indicating that a cell meets a cell identification requirement within a past fourth time length;
the cell measurement result indicating that a cell is detected within a past fourth time length;
the cell measurement result indicating that a cell is measured within a past fourth time length; or
the cell measurement result indicating that an effective measurement result is reported for a cell within a past fourth time length.

11. The method according to any one of claims 8 to 10, wherein the first information is used to report the cell measurement result of the terminal, and receiving the first information sent by the terminal comprises:
receiving the first information sent by the terminal based on a network measurement reporting configuration.

12. The method according to claim 11, wherein determining the duration of the effective measurement window configured for the terminal based on the first information comprises:
determining the duration of the effective measurement window configured for the terminal based on the cell measurement result of the terminal within a past fourth time length.

13. The method according to claim 12, wherein sending the second information to the terminal based on the duration of the effective measurement window configured for the terminal comprises:
sending the second information to the terminal in a case where the duration of the effective measurement window determined based on the cell measurement result of the terminal within the past fourth time length is inconsistent with the duration of the effective measurement window indicated by previously sent second information.

14. The method according to any one of claims 8 to 13, wherein the second information carries the duration of the effective measurement window configured by the network device for the terminal; or
the second information carries window pattern configuration information, wherein the window pattern configuration information is used for the terminal to determine the duration of the effective measurement window.

15. The method according to any one of claims 8 to 14, wherein the terminal is connected to a new radio (NR) network, the terminal is used to measure a cell in a long term evolution (LTE) network without a measurement gap in the NR network, and the duration of the effective measurement window is used for the terminal to measure the cell in the LTE network.

16. A terminal, comprising:
a transceiver module configured to send first information to a network device, wherein the first information is used to indicate whether a terminal has a capability of performing cell measurement using an effective measurement window having a duration less than a first time length, and/or the first information is used to report a cell measurement result of the terminal,
wherein the transceiver module is further configured to receive second information sent by the network device based on the first information, wherein the second information indicates a duration of an effective measurement window configured by the network device for the terminal.

17. A network device, comprising:
a transceiver module configured to receive first information sent by a terminal, wherein the first information is used to indicate whether a terminal has a capability of performing cell measurement using an effective measurement window having a duration less than a first time length, and/or the first information is used to report a cell measurement result of the terminal; and
a processing module configured to determine a duration of the effective measurement window configured for the terminal based on the first information,
wherein the transceiver module is further configured to send second information to the terminal based on the duration of the effective measurement window configured for the terminal, and the second information indicates the duration of the effective measurement window configured by a network device for the terminal.

18. A terminal, comprising:
one or more processors,
wherein the terminal is configured to perform the method according to any one of claims 1 to 7.

19. A network device, comprising:
one or more processors,
wherein the network device is configured to perform the method according to any one of claims 8 to 15.

20. A communication system comprising a terminal and a network device, wherein the terminal is configured to implement the method according to any one of claims 1 to 7, and the network device is configured to implement the method according to any one of claims 8 to 15.

21. A storage medium storing instructions that, when executed by a communication device, cause the communication device to perform the method according to any one of claims 1 to 7 or 8 to 15.
